# EUROPÄISCHE PATENTANMELDUNG

(11) **EP 4 501 810 A1**
(43) Veröffentlichungstag der Anmeldung: **05.02.2025**
(21) Anmeldenummer: 24179253.0
(22) Anmeldetag: 31.05.2024
(51) Int. Cl.: B65D 63/10, B60J 7/10

(54) **VORRICHTUNG ZUR VERBINDUNG EINER PLANE MIT EINEM SCHIEBEVERDECK**

(30) Priorität: 31.07.2023 DE 202023104331 U
(71) Anmelder: IMA-FM-1896 GmbH & Co. KG, 59846 Sundern (DE)
(72) Erfinder: Müller, Moritz, 59846 Sundern (DE); Lionnais, Benjamin, 59846 Sundern (DE)
(74) Vertreter: Patentanwälte Dörner & Kötter PartG mbB

(57) **Zusammenfassung**

Die Erfindung betrifft eine Vorrichtung zur Verbindung einer Plane mit einem Spriegel eines Schiebeverdecks eines LKW, umfassend einen Riemen zur Durchführung durch eine an der Plane hierfür vorgesehene Schlaufe, der mit Öffnungen (2) zur Aufnahme eines an dem Riemen (1) hierzu angeordneten Haltemittels versehen ist, wobei die Vorrichtung durch einen einteiligen Riemen (1) gebildet ist, wobei das Haltemittel durch einen Endabschnitt (3) des Riemens (1) gebildet ist.

## Beschreibung

Die Erfindung betrifft eine Vorrichtung zur Verbindung einer Plane mit Spriegeln eines Schiebeverdecks eines LKW nach dem Patentanspruchs 1.

Es ist bekannt, Lastkraftwagen sowie auch Anhänger (Trailer) dachseitig mit einer Plane zu versehen, die als Schiebeverdeck ausgebildet sind, um einerseits einen sicheren und trockenen Transport von Waren zu gewährleisten und andererseits eine Kran- oder Schüttbeladung von oben zu ermöglichen. Um ein leichtes Öffnen und Schließen des Schiebeverdecks zu ermöglichen, weist das Schiebeverdeck eine Verdeckstruktur auf, die eine Vielzahl von Spriegeln aufweist, die auf zwei parallel zueinander angeordneten, als Führungsschienen fungierenden Längsgurten verschiebbar geführt sind. Auf den Spriegeln ist eine Plane befestigt, die hierzu mit Schlaufen versehen ist. In der Regel sind die Schlaufen durch sogenannte Schlaufenbänder gebildet, die quer zu der Plane auf diese aufgeschweißt sind und in die in regelmäßigen Abständen Schlaufen eingewebt sind.

Durch die Schlaufen sind Schnallriemen gezogen, über welche die Plane an den Spriegeln diese umschließend befestigt ist. Derartige Schnallriemen bestehen bekanntermaßen aus einem mit kreisrunden Löchern versehenen Riemen, an den endseitig eine in der Regel aus Metall hergestellte Schnalle befestigt ist, die einen Bügel mit einem beweglichen Dorn aufweist. Zur Befestigung wird der Schnallriemen mit seinem der Schnalle gegenüberliegenden Ende, dessen Seiten häufig angeschrägt ausgeführt sind, durch eine Schlaufe der Plane gezogen und nachfolgend einen Spriegel umfassend durch die Schnalle geführt und festgezogen. In dieser Position wird der Dorn durch das nächstliegende Loch des Riemens geführt, wodurch der Riemen in seiner gespannten Position fixiert ist. Eine derartige Befestigung der Plane an einem Spriegel ist beispielsweise in der DE 10 2017 010 376 B3 offenbart.

Zur Befestigung einer Plane an der Verdeckstruktur eines Schiebeverdecks ist eine große Anzahl an solchen Schnallriemen erforderlich, wodurch ein nicht unerheblicher Kostenfaktor gebildet ist.

Hier setzt die vorliegende Erfindung an. Der Erfindung liegt die Aufgabe zu Grunde, eine Vorrichtung zur Verbindung einer Plane mit einem Spriegel des Schiebeverdecks eines LKW bereitzustellen, die ein gleichwertiges Spannen um einen Spriegel ermöglicht und dabei einfach und kostengünstig herzustellen ist. Gemäß der Erfindung wird diese Aufgabe durch eine Vorrichtung mit den Merkmalen des Patentanspruchs 1 gelöst.

Mit der Erfindung ist eine Vorrichtung zur Verbindung einer Plane mit einem Spriegel des Schiebeverdecks eines LKW bereitgestellt, die ein gleichwertiges Spannen um einen Spriegel ermöglicht und dabei einfach und kostengünstig herzustellen ist. Dadurch, dass die Vorrichtung durch einen einteiligen Riemen gebildet ist, wobei das Haltemittel durch einen Endabschnitt des Riemens gebildet ist, ist eine Befestigung einer aufwändigen Schnalle nicht erforderlich. Der Riemen ist einfach und Kostengünstig durch einen Stanzvorgang herstellbar. Die Klemmung des Gurtes ist simpel durchführbar. Auf eine einfache Handhabung beim Öffnen des Gurtes kommt es nicht an, da der Riemen nicht wieder geöffnet wird, sobald er einmal verbaut wurde.

In Weiterbildung der Erfindung weist der Endabschnitt eine Einschnürung auf, durch die ein Mittelsteg gebildet ist, an den sich ein Formstück anschließt und durch die ein Eingriff gebildet ist, dessen Breite wenigstens der Dicke des Riemens entspricht. Hierdurch ist ein nach Durchführung des Formstücks durch eine Öffnung eine formschlüssige zugfeste Verbindung des die Öffnung umgebenden Riemenabschnitts mit dem Endabschnitt erzielt.

In Ausgestaltung der Erfindung sind die Öffnungen durch Langlöcher gebildet. Bevorzugt sind die Langlöcher rechteckförmig ausgebildet, wobei diese besonders bevorzugt an ihren Enden mit Radien versehen sind. Hierdurch ist die Durchführung des Formstücks durch eine Öffnung erleichtert.

In weiterer Ausgestaltung der Erfindung ist die Einschnürung durch zwei gegenüberliegend in den Riemen eingebrachte vorzugsweise rechteckige Ausnehmungen gebildet. Hierdurch ist eine Verschränkung zwischen dem Riemen und dem Endstück im Bereich der der Einschnürung erzielt, wodurch ein belastbarer Formschluss bewirkt ist.

In Weiterbildung der Erfindung weist das Formstück beidseitig des Mittelsteges jeweils eine gerade Kante auf, die mit dem Mittelsteg einen Winkel von kleiner 90°, vorzugsweise 45° einschließt. Hierdurch sind Laschen gebildet, die sich bei Zugbelastung des Riemens umlegen und an dem eine Öffnung umgebenden Riemenbereich anlegen, wodurch die Belastbarkeit der Riemenverbindung erhöht ist.

In Ausgestaltung der Erfindung ist das Formstück endseitig sich in seiner Breite verjüngend ausgebildet. Hierdurch ist die Durchführung des Endes durch eine Öffnung erleichtert. Bevorzugt weist das Formstück endseitig eine abgerundete oder abgeflachte Spitze auf.

In einer alternativen Ausgestaltung der Erfindung ist das Formstück dreieckförmig oder halbkreisförmig ausgebildet. Vorzugsweise schließen hier wiederum die zwei an den Mittelsteg anliegenden geraden Kanten einen Winkel von kleiner 90°, bevorzugt von kleiner gleich 60°, besonders bevorzugt von 45° ein.

In weiterer Ausgestaltung der Erfindung sind an dem Formstück vorhandene Innen- und/oder Außenecken abgerundet ausgebildet. Hierdurch ist einer Rissbildung unter Last entgegengewirkt.

Vorteilhaft ist der Riemen aus einem gewebeverstärkten, insbesondere thermoplastischen Kunststoffband hergestellt. Hierdurch ist ein leichter und zugleich strapazierfähiger Riemen erzielt.

In einer weiteren Ausgestaltung der Erfindung umfasst der Endabschnitt wenigstens zwei hintereinander gereihte Formstücke mit anschließendem Mittelsteg. Hierdurch ist eine Verschränkung des Endabschnitts mit mehreren Löchern ermöglicht, wodurch die Belastbarkeit weiter erhöht ist.

Gegenstand der Erfindung ist weiterhin ein Schiebeverdeck für einen LKW, umfassend zwei parallel zueinander angeordnete Führungsschienen, auf denen eine Anzahl von Spriegeln verschiebbar angeordnet sind, auf denen eine Plane angeordnet ist, die über Befestigungsmittel mit den Spriegeln verbunden ist, wobei die Befestigungsmittel durch Vorrichtungen der vorstehend beschriebenen Art gebildet sind.

Andere Weiterbildungen und Ausgestaltungen der Erfindung sind in den übrigen Unteransprüchen angegeben. Ausführungsbeispiele der Erfindung sind in den Zeichnungen dargestellt und werden nachfolgend im Einzelnen beschrieben. Es zeigen:
- Figur 1: die schematische Darstellung einer Vorrichtung zur Verbindung einer Plane mit einem Spriegel des Schiebeverdecks eines LKW a) in offener Position; b) in geschlossener Position;
- Figur 2: die schematische Darstellung einer Vorrichtung zur Verbindung einer Plane mit einem Spriegel des Schiebeverdecks eines LKW in einer weiteren Ausführungsform in offener Position;
- Figur 3: die schematische Darstellung einer Vorrichtung zur Verbindung einer Plane mit einem Spriegel des Schiebeverdecks eines LKW in einer dritten Ausführungsform in geschlossener Position;
- Figur 4: die schematische Darstellung einer Vorrichtung zur Verbindung einer Plane mit einem Spriegel des Schiebeverdecks eines LKW in einer vierten Ausführungsform mit zwei Formstücken a) in offener Position; b) in geschlossener Position in einer Seitenansicht; c) in geschlossener Position in einer Vorderansicht.

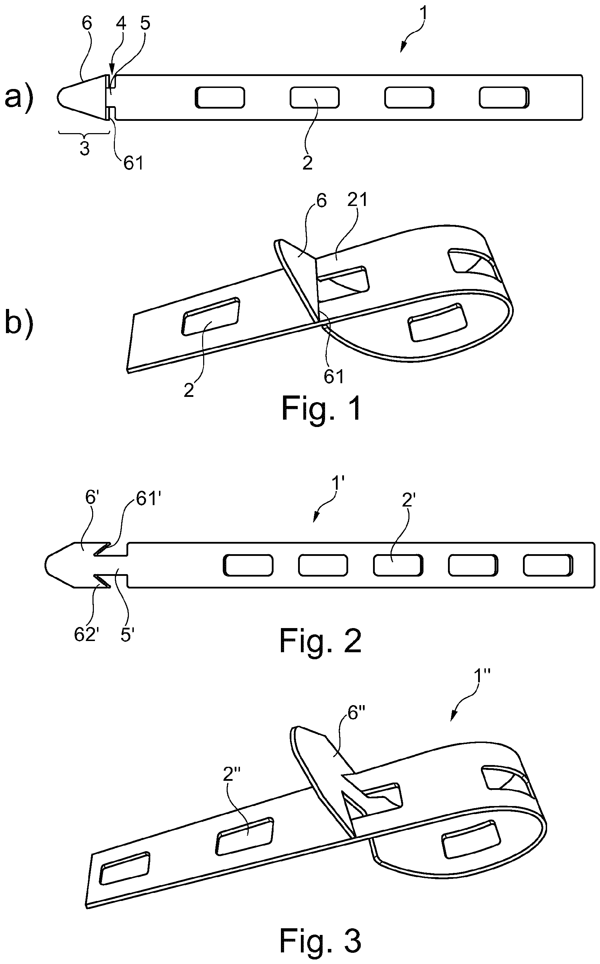

Die als Ausführungsbeispiel gewählte Vorrichtung gemäß Figur 1 besteht aus einem im Wesentlichen rechteckig ausgebildeten Riemen 1, der mit einer Anordnung aus regelmäßig zueinander beabstandeten rechteckigen Öffnungen 2 versehen ist. Im Ausführungsbeispiel ist der Riemen 1 aus gewebeverstärktem Polyvinylchlorid (PVC) hergestellt. Beabstandet zu den Öffnungen 2 ist ein Endabschnitt 3 vorhanden, der eine Einschnürung 4 aufweist, durch die ein Mittelsteg 5 gebildet ist, an den sich ein Formstück 6 anschließt. Die Einschnürung 4 ist durch zwei gegenüberliegend in den Riemen 1 eingebrachte rechteckige Ausnehmungen gebildet. Das Formstück 6 das in Form eines Dreiecks mit abgerundeten Ecken ausgebildet. Die an den Mittelsteg 5 angrenzenden Kanten 61 des Formstücks schließen mit dem Mittelsteg einen rechten Winkel ein.

In Figur 1 b) ist die Vorrichtung in geschlossenem Zustand gezeigt. Hierbei ist das Formstück 6 durch eine der Öffnungen 2 hindurchgezogen, wobei die die Öffnung begrenzenden Seitenwände 21 in die Einschnürung 4 eingerastet sind.

In Figur 2 ist eine weitere Ausführungsform gezeigt. Die in den Riemen 1' eingebrachten Öffnungen 2' sind als Langlöcher mit abgerundeten Enden ausgeführt. Weiterhin ist das Formstück 6' in Art eines Pfeils mit abgeflachter Spitze und endseitig parallelen Seitenkanten ausgebildet. Die an den in dieser Ausführungsform länger dimensionierte Mittelsteg 5 angrenzenden geraden Kanten 61' des Formstücks 6' schließen mit dem Mittelsteg 5' einen Winkel von 45° ein, wodurch beidseitig des Mittelsteges 5' Laschen 62 gebildet sind.

Im Ausführungsbeispiel gemäß Figur 3 sind die in den Riemen 1" eingebrachten Öffnungen 2" wiederum als Langlöcher mit abgerundeten Enden ausgeführt. Das Formstück 6' in Art eines Pfeils, hier mit kreisbogenförmig ausgebildeter Spitze und parallelen Seitenkanten ausgebildet.

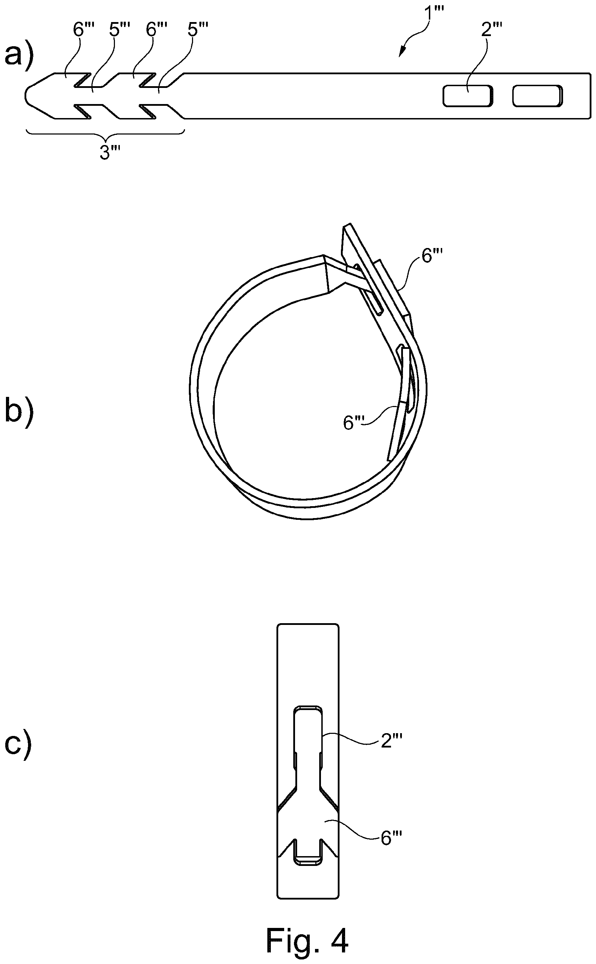

Im Ausführungsbeispiel gemäß Figur 4 umfasst der Endabschnitt 3‴ des Riemens 1‴ zwei hintereinander gereihte Formstücke 6‴ mit an diesen angeordneten Mittelstegen 5‴. Die Formstücke 6‴ sind dabei entsprechend den Formstücken 6' des Ausführungsbeispiels nach Figur 2 ausgebildet. Der Riemen 1‴ weist wiederum Öffnungen 2‴ auf, die als Langlöcher mit abgerundeten Enden ausgeführt sind.

## Patentansprüche

1. Vorrichtung zur Verbindung einer Plane mit einem Spriegel eines Schiebeverdecks eines LKW, umfassend einen Riemen zur Durchführung durch eine an der Plane hierfür vorgesehene Schlaufe, der mit Öffnungen (2) zur Aufnahme eines an dem Riemen (1) hierzu angeordneten Haltemittels versehen ist, **dadurch gekennzeichnet, dass** die Vorrichtung durch einen einteiligen Riemen (1) gebildet ist, wobei das Haltemittel durch einen Endabschnitt (3) des Riemens (1) gebildet ist.

2. Vorrichtung nach Anspruch 1, **dadurch gekennzeichnet, dass** der Endabschnitt (3) eine Einschnürung (4) aufweist, durch die ein Mittelsteg (5) gebildet ist, an den sich ein Formstück (6) anschließt und durch die ein Eingriff gebildet ist, dessen Breite wenigstens der Dicke des Riemens (1) entspricht, wobei die Öffnungen (2) bevorzugt durch insbesondere rechteckförmige Langlöcher gebildet sind.

3. Vorrichtung nach Anspruch 2, **dadurch gekennzeichnet, dass** die Einschnürung (4) durch zwei gegenüberliegend in den Riemen (1) eingebrachte vorzugsweise rechteckige Ausnehmungen gebildet ist.

4. Vorrichtung nach Anspruch 2 oder 3, **dadurch gekennzeichnet, dass** das Formstück (6) beidseitig des Mittelsteges (5) jeweils eine gerade Kante (61) aufweist, die mit dem Mittelsteg (5) einen Winkel von kleiner 90° einschließt.

5. Vorrichtung nach einem der Ansprüche 2 bis 4, **dadurch gekennzeichnet, dass** das Formstück (6) endseitig sich in seiner Breite verjüngend ausgebildet ist.

6. Vorrichtung nach einem der Ansprüche 2 bis 5, **dadurch gekennzeichnet, dass** das Formstück (6) endseitig eine abgerundete oder abgeflachte Spitze aufweist.

7. Vorrichtung nach Anspruch 2 oder 3, **dadurch gekennzeichnet, dass** das Formstück (6) dreieckförmig oder halbkreisförmig ausgebildet ist.

8. Vorrichtung nach einem der Ansprüche 2 bis 7, **dadurch gekennzeichnet, dass** an dem Formstück (6) vorhandene Innen- und/oder Außenecken abgerundet ausgebildet sind.

9. Vorrichtung nach einem der Ansprüche 2 bis 8, **dadurch gekennzeichnet, dass** der Endabschnitt (3) wenigstens zwei hintereinander gereihte Formstücke (6) mit angeordnetem Mittelsteg (5) umfasst.

10. Schiebeverdeck für einen LKW, umfassend zwei parallel zueinander angeordnete Führungsschienen, auf denen eine Anzahl von Spriegeln verschiebbar angeordnet sind, auf denen eine Plane angeordnet ist, die über Befestigungsmittel mit den Spriegeln verbunden ist, **dadurch gekennzeichnet, dass** die Befestigungsmittel durch Vorrichtungen nach einem der vorgenannten Ansprüche gebildet sind.
